# DEMANDE DE BREVET EUROPEEN

(11) **EP 0 635 305 A1**
(43) Date de publication de la demande: **25.01.1995**
(21) Numéro de dépôt: 94401688.0
(22) Date de dépôt: 21.07.1994
(51) Int. Cl.: B01L 3/14, G06K 19/04

(54) **Dispositif en forme de paillette pour la conservation d'un produit liquide ou pulvérulent**

(30) Priorité: 22.07.1993 FR 9309045
(71) Demandeur: SOCIETE D'ETUDES, DE GESTION, D'ENGINEERING, F-61300 L'Aigle (FR)
(72) Inventeur: Cassou, Bertrand, F-61300 Saint Symphorien des Bruyeres (FR)
(74) Mandataire: Obolensky, Michel

(57) **Abrégé**

Dispositif pour la conservation d'un produit liquide ou pulvérulent comprenant un tube (1) en matière plastique souple résistant à la traction et à la compression longitudinale, ledit tube contenant le produit liquide ou pulvérulent étant pourvu de moyens d'obturation (7) à ses deux extrémités et d'un support (5) d'informations d'identification du produit, caractérisé en ce que le support d'informations (5) est contenu lui aussi dans ledit tube (1).

## Description

La présente invention est relative à la conservation de produits tels que des vaccins, lymphocytes, sérums, gamètes ou autres, sous forme liquide ou pulvérulente et se rapporte plus particulièrement aux dispositifs de conservation de tels produits qui permettent leur transport à l'abri de l'air et aussi leur stockage par grand froid, notamment à la température de l'azote liquide.

On connaît un dispositif de conservation comprenant un tube en matière plastique souple, résistant à la traction et à la compression longitudinale contenant un liquide à conserver et dont l'une des extrémités est bouchée hermétiquement par la combinaison d'une substance perméable à l'air et aseptisée et d'une substance pulvérulente transformée au contact du liquide en une pâte ou un gel étanche tandis que l'autre extrémité est bouchée par une couche de cette même pâte ou de ce gel.

L'obturation peut également être renforcée par chauffage du bout correspondant du tube jusqu'au ramollissement de celui-ci et par scellage autogène ou par ultrasons.

Un dispositif de ce type est décrit dans le brevet français n° 995 878 déposé le 20 septembre 1949 au nom de M. Robert CASSOU.

On connaît également un dispositif de conservation de produit liquide de construction similaire à celle du dispositif de conservation décrit plus haut mais dans lequel les deux extrémités du tube en matière plastique sont obturées par soudage. Ces soudures élargies assurent également le maintien d'un dispositif d'identification de ces paillettes fait d'une longueur de gaine enfilée sur la paillette.

Ces deux dispositifs sont décrits dans les brevets français n° 89 12 042 et 92 03 637 déposés les 14 septembre 1989 et 26 mars 1992 aux noms de Robert, Maurice et Bertrand CASSOU.

L'invention vise à réaliser un dispositif de conservation de produits liquides ou pulvérulents perfectionné vis à vis des dispositifs connus en créant un dispositif de conditionnement qui soit d'une utilisation particulièrement pratique notamment en ce qui concerne l'inscription et la lecture des données d'identification du produit liquide ou pulvérulent contenu dans le tube tout en conservant ses propriétés de transport du produit à l'abri de l'air et de stockage à très basse température.

Elle a donc pour objet un dispositif de conservation d'un produit liquide ou pulvérulent comprenant un tube en matière plastique souple résistant à la traction et à la compression longitudinale, ledit tube contenant le produit liquide ou pulvérulent étant pourvu de moyens d'obturation à ses deux extrémités et d'un support d'informations d'identification du produit, caractérisé en ce que le support d'informations est contenu lui aussi dans ledit tube.

Selon une caractéristique particulière de l'invention, le tube est réalisé en matière plastique transparente et le support d'informations est un jonc qui porte des inscriptions lisibles à travers la paroi du tube.

Selon une autre caractéristique de l'invention, le support d'informations comporte en outre une puce électronique de stockage d'informations relatives au produit conservé dans le tube, ladite puce électronique étant incorporée au jonc contenu dans le tube.

Selon encore une autre caractéristique de l'invention, le tube de conservation du produit est divisé en deux compartiments séparés de façon étanche par un bouchon, un premier compartiment contenant le produit à conserver et le second compartiment contenant ledit support d'informations en forme de jonc.

Selon une caractéristique supplémentaire de l'invention, le tube de conservation du produit contient à la fois dans un compartiment unique, le produit à conserver et ledit support d'informations en forme de jonc, en contact avec le produit.

Selon encore une caractéristique supplémentaire de l'invention, les moyens d'obturation du tube de conservation du produit comprennent au moins un bouchon rapporté en matière plastique et en ce que le support d'informations est ledit bouchon qui comprend une puce électronique.

L'invention sera mieux comprise à l'aide de la description qui va suivre, donnée uniquement à titre d'exemple et faite en se référant aux dessins annexés, sur lesquels :
- la Fig.1 est une vue en élévation avec arrachement partiel d'un dispositif de conservation de produit liquide suivant l'invention:
- la Fig.2 est une vue en élévation avec arrachement partiel d'une variante du dispositif de conservation de la Fig.1;
- la Fig.3 est une vue en élévation avec arrachement partiel d'un autre mode de réalisation du dispositif de conservation suivant l'invention ;
- la Fig.4 est une vue en élévation avec arrachement partiel d'une variante du dispositif de la Fig.3;
- la Fig.5 est une vue en élévation et en coupe avec arrachement partiel d'un mode de réalisation supplémentaire du dispositif de conservation suivant l'invention; et
- la Fig.6 est une vue en élévation et en coupe d'une variante du dispositif de la Fig.5.

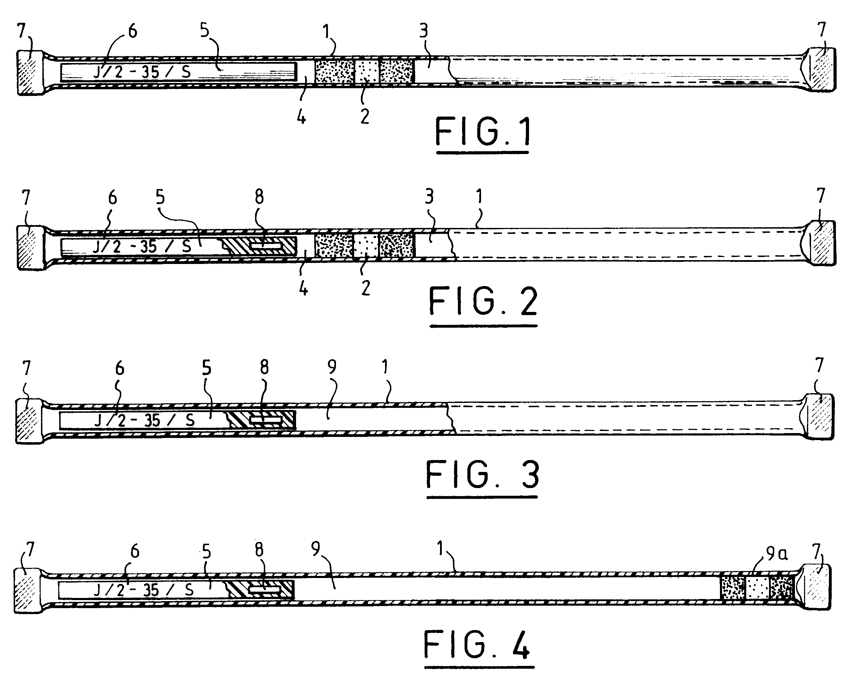

Le dispositif de conservation représenté à la Fig.1, comporte principalement un tube en matière plastique transparente 1 destiné à contenir un produit liquide, tel qu'un vaccin, des lymphocytes, des gamètes, des milieux de culture liquides, un sérum, des dérivés du sang ou autres afin de permettre leur transport à l'abri de l'air ainsi que leur stockage à de très basses températures, notamment à celle de l'azote liquide.

Le tube 1 est séparé en deux compartiments par un bouchon étanche 2 placé par exemple au tiers de la longueur totale du tube.

Le bouchon 2 est avantageusement réalisé par la combinaison d'une substance perméable à l'air et aseptisée et d'une substance pulvérulente gélifiée au contact du liquide destiné à être contenu dans le tube en une pâte ou gel étanche, du type décrit au brevet français n° 995 878 précité.

Le premier compartiment 3 du tube 1 délimité par le bouchon 2 est destiné à contenir un produit liquide à conditionner.

Le second compartiment 4 délimité par le bouchon 2 constitue une zone sèche réservée à l'identification du produit à conditionner. Il contient dans le présent exemple un jonc en matière plastique 5 qui porte sur sa surface latérale des inscriptions 6 d'identification du produit conditionné.

Le jonc 5 en matière plastique peut être remplacé par une étiquette portant des codes barres ou toute autre information typographique.

Après introduction du produit à conditionner dans le compartiment 3, et mise en place dans le compartiment 4 du jonc 5 portant les informations d'identification de ce produit, les extrémités ouvertes des compartiments 3 et 4 sont obturées par exemple par scellage autogène de ces extrémités pour obtenir des bouts aplatis 7.

Grâce à un tel agencement, on obtient d'une part un compartiment étanche réservé au stockage de la substance liquide et d'autre part, un compartiment ou zone sèche réservé à l'identification, cette zone étant strictement inviolable, car le tube en matière plastique ou paillette étant soudé à ses deux extrémités, il serait impossible de perdre le jonc inséré dans le compartiment 4 réservé à l'identification où de pouvoir l'échanger sans couper l'extrémité correspondante du tube 1.

Le compartiment 4 contenant le jonc d'identification 5 en zone sèche permet de récupérer par exemple le jonc après avoir découpé le bout aplati soudé 7 correspondant sans contaminer le contenu du compartiment 3.

Le jonc 5 inséré dans le compartiment 4 réservé à l'identification peut être d'une couleur particulière, correspondant par exemple à la nature de produit contenu dans le tube 1.

Il porte une inscription alphanumérique 6 qui peut être lisible par transparence à travers la paroi du tube 1.

Ces inscriptions peuvent être également des inscriptions numériques ou des codes barres.

Le dispositif de conservation représenté à la Fig.2 est en tout point semblable à celui de la Fig.1 à l'exception du fait que le jonc en matière plastique 5 formant support d'informations et portant des inscriptions alphanumériques 6 comporte en outre enrobé dans sa masse, un circuit intégré 8 de mémorisation de données d'identification du produit contenu dans le compartiment 3 séparé du compartiment 4 contenant le jonc en matière plastique 5 par le bouchon étanche 2.

Ce circuit intégré 8 appelé encore puce électronique, permet de stocker dans au moins une mémoire qu'il comporte un nombre d'informations beaucoup plus important que celui pouvant être inscrit sur la surface latérale d'un support d'informations tel que le jonc 5.

Par ailleurs, selon la structure de ce circuit intégré 8, les données qu'il contient peuvent être modifiées à volonté pour indiquer l'évolution du produit contenu dans le compartiment 3.

Dans le cas des modes de réalisation des Fig.1 et 2, le jonc d'identification 5 peut être utilisé comme poussoir pour calibrer le volume souhaité du compartiment 3 destiné à contenir le produit à conserver.

A cet effet, on donne au jonc une longueur déterminée et lors de l'introduction du jonc 5 dans le tube 1, celui-ci repousse le bouchon 2 dans le tube à une distance correspondant au volume de liquide à stocker dans la zone 3 en vue de l'aspiration de la solution liquide à travers le bouchon avant qu'il ne soit rendu étanche.

Le dispositif de conservation représenté à la Fig.3 est adapté pour conserver les produits liquides cités plus haut mais également des produits pulvérulents tel qu'un milieu de culture pulvérulent. Ce dispositif diffère essentiellement de ceux décrits en référence aux Fig.1 et 2 en ce qu'il comporte un support d'informations en forme de jonc en matière plastique 5 disposé dans un compartiment unique 9 ménagé dans le corps 1 en matière plastique transparente ou paillette, le compartiment unique étant destiné à contenir également le produit à conserver, qui se trouve ainsi en contact avec le support d'informations 5 en forme de jonc.

Le jonc en matière plastique 5 qui est réalisé d'une couleur déterminée, correspondant par exemple au type de produit conditionné dans le dispositif de conservation, nage dans la solution contenue dans le tube 1.

Selon une variante, ce tube peut être fermé à une de ses extrémités par un bouchon étanche tel que le bouchon 2 décrit en référence aux Fig.1 et 2. Dans ce cas, il est adapté pour conserver des produits liquides.

Cette variante est représentée à la Fig.4 sur laquelle on voit que le tube 1 est obturé à ses deux extrémités par des bouts aplatis soudés 7, mais qu'à une extrémité du tube opposée au jonc 5 est placé un bouchon 9a permettant avant de devenir étanche au contact du liquide contenu dans le tube, de permettre son remplissage par aspiration puis son obturation définitive.

L'avantage de l'agencement décrit en référence à la Fig.3, réside dans le fait que lors d'analyse en laboratoire par exemple, le jonc 5 peut accompagner la solution à traiter dans des tubes à essai ou d'analyse afin d'être repéré visuellement ou électriquement au cours des différentes opérations d'analyse souvent effectuées à l'aide de machines équipées d'automates.

Aucune souillure n'est possible et le fait que le support d'information suit le produit qu'il désigne évite totalement des erreurs d'interprétations.

Le jonc 5 des modes de réalisation des figures 2 et 3 contient une puce électronique 8 enrobée qui peut comporter deux mémoires. La longueur de l'antenne de la puce peut être placée sur toute la longueur du jonc.

Cette puce selon sa construction, permet de délivrer des informations à un lecteur à commande à distance.

La présence dans le dispositif du circuit intégré ou puce électronique 8 permet de faciliter toutes les manipulations d'analyse ou de conditionnement de substances très particulières par des procédés automatisés puisque la machine d'analyse et de conditionnement utilisée avant, pendant et après les opérations peut à tout instant interroger le circuit électronique intégré ou puce 8 afin d'en recevoir les informations utiles ou bien introduire dans la ou les mémoires de celle-ci des résultats et des données supplémentaires.

La puce électronique 8 peut par exemple comporter également une mémoire verrouillée à laquelle ne pourra accéder que la personne possédant un code confidentiel.

Une seconde mémoire sera libre d'accès et pourra être interrogée, voire même modifiée ou effacée pour entrer de nouveaux éléments d'informations.

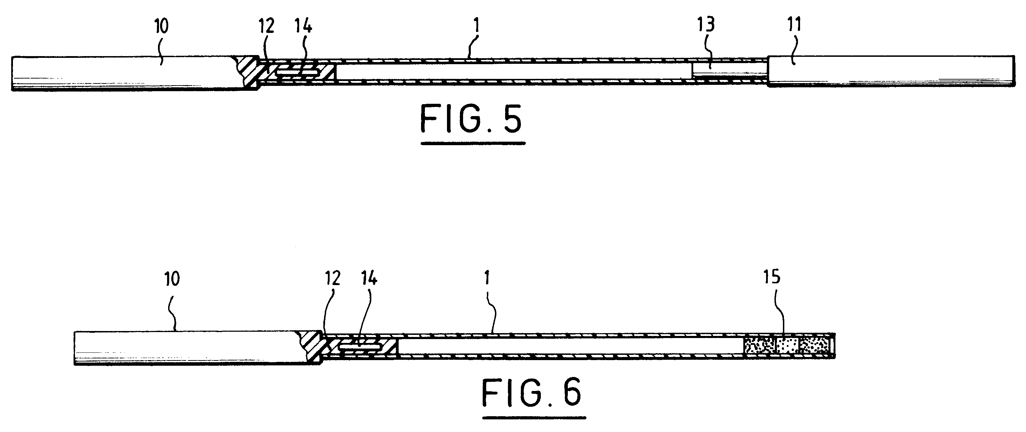

Le dispositif de conservation de produit liquide représenté à la Fig.5 comporte lui aussi un tube 1 en matière plastique destiné à contenir un produit liquide ou pulvérulent à conditionner. Ce dispositif diffère des dispositifs décrits précédemment en ce qu'à ses extrémités, le tube 1 est obturé par des bouchons 10,11 formés par des joncs en matière plastique de couleur présentant chacun une partie de plus petit diamètre 12,13 engagée dans l'extrémité correspondante du tube 1 afin de l'obturer.

Les bouchons 10 et 11 sont avantageusement d'une couleur déterminée indiquant la nature du produit conditionné dans le tube 1.

Dans l'un des bouchons, à savoir le bouchon 10, et plus particulièrement dans sa partie 12 engagée dans le tube 1, est en outre incorporée notamment par surmoulage, une puce électronique 14 de la dimension d'un grain de riz qui constitue le support d'informations du dispositif de la Fig.4 et qui est d'une construction semblable à celle des puces 8 des modes de réalisation des Fig.2 et 3.

En variante, la puce électronique peut être noyée dans la partie du bouchon 10 non engagée dans le tube 1, afin de permettre une lecture à plus grande distance.

Bien entendu, le dispositif peut comporter deux bouchons pourvus chacun d'une puce électronique du type précité.

Les puces électroniques des deux bouchons contiennent alors les mêmes informations relatives au produit conditionné. Lors de l'ouverture du tube par retrait d'un bouchon, le bouchon retiré peut être conservé comme moyen de contrôle et de comparaison alors que l'autre bouchon accompagne le produit dans ses phases de traitement.

Les bouchons épaulés 10 et 11 permettent de boucher manuellement le tube ou paillette 1 par simple emmanchement et en évitant tout procédé de soudure.

Le dispositif de conservation représenté à la Fig.6 est une variante du dispositif décrit en référence à la Fig.5, adaptée à la conservation d'un produit liquide.

Il ne diffère de ce dernier que par le fait qu'il ne comporte qu'un seul bouchon 10 formé par un jonc en matière plastique de couleur dont une partie de plus petit diamètre 12 engagée dans l'extrémité correspondante du tube 1 contient une puce électronique 14. En revanche, l'autre extrémité du tube 1 est obturée par un bouchon 15 constitué par la combinaison d'une substance perméable à l'air et aseptisée et d'une substance pulvérulente transformée au contact du liquide en une pâte ou gel étanche, du type décrit au brevet français n° 995 878 précité.

Le dispositif de conservation de produits liquides ou pulvérulents suivant l'invention sous toutes ses formes décrites en référence aux Fig.1 à 6, présente l'avantage de comporter un support d'informations inviolable.

Dans les modes de réalisation qui comportent une puce électronique, le dispositif présente en outre l'avantage de permettre une lecture à distance d'une information contenue dans la mémoire de la puce et de modifier ces informations en fonction de l'évolution du produit conditionné dans le tube ou paillette correspondant.

Les modes de réalisation du dispositif suivant l'invention représentés aux Fig.1,2,4 et 6 permettent un remplissage automatisé et rapide d'un produit liquide grâce à la présence des bouchons 2, 9a et 15 qui sont perméables à l'air avant d'entrer en contact avec le produit liquide et permettent donc une opération d'aspiration du produit.

Les modes de réalisation du dispositif suivant l'invention représentés aux Fig. 3 et 4 sont adaptés à la conservation d'un produit pulvérulent ou liquide.

## Revendications

1. Dispositif de conservation d'un produit liquide ou pulvérulent comprenant un tube (1) en matière plastique souple résistant à la traction et à la compression longitudinale, ledit tube contenant le produit liquide ou pulvérulent étant pourvu de moyens d'obturation (7;7,9a;10,11;10,15) à ses deux extrémités et d'un support (5;5,8;12) d'informations d'identification du produit, caractérisé en ce que le support d'informations (5;5,8, 12) est contenu lui aussi dans ledit tube (1).

2. Dispositif de conservation suivant la revendication 1, caractérisé en ce que le tube (1) de conservation du produit est divisé en deux compartiments (3,4) séparés de façon étanche par un bouchon (2), un premier compartiment (3) contenant le produit à conserver et le second compartiment (4) contenant ledit support d'informations (5) placé en zone séche.

3. Dispositif de conservation suivant l'une des revendications 1 et 2, caractérisé en ce que le tube (1) est réalisé en matière plastique transparente et le support d'informations est un jonc (5) qui porte des inscriptions (6), lisibles à travers la paroi du tube.

4. Dispositif de conservation suivant l'une des revendications 1 et 2, caractérisé en ce que le tube est réalisé en matière plastique transparente et le support d'informations est une étiquette portant des codes lisibles à travers la paroi du tube.

5. Dispositif de conservation suivant l'une des revendications 1 à 3, caractérisé en ce que le support d'informations (5) en forme de jonc comporte en outre une puce électronique de stockage d'informations (8) relatives au produit conservé dans le tube, ladite puce électronique (8) étant incorporée au jonc (5).

6. Dispositif de conservation suivant l'une des revendications 2, 3 et 5, caractérisé en ce que le support d'informations en forme de jonc (5) constitue un poussoir de calibrage du volume du premier compartiment (3) par déplacement du bouchon (2) dans le tube (1).

7. Dispositif de conservation suivant l'une des revendications 1, et 3 à 5, caractérisé en ce que le tube de conservation du produit contient à la fois dans un compartiment unique (9), le produit à conserver et ledit support d'informations en forme de jonc (15), en contact avec le produit.

8. Dispositif de conservation suivant la revendication 1, caractérisé en ce que les moyens d'obturation du tube de conservation du produit comprennent au moins un bouchon rapporté (10,11) en matière plastique et en ce que le support d'informations est ledit bouchon (10) qui comprend une puce électronique (14).

9. Dispositif de conservation suivant la revendication 8, caractérisé en ce que le bouchon (10, 11) est de forme épaulée et en ce que la puce électronique (14) est noyée dans l'un des bouchons engagé dans le tube (1).

10. Dispositif de conservation suivant l'une des revendications 8 et 9, caractérisé en ce qu'il comporte deux bouchons en matière plastique comportant chacun une puce électronique, les puces électroniques des deux bouchons contenant les mêmes informations relatives au produit contenu dans le tube (1), l'un des bouchons, après ouverture du tube, formant un moyen de contrôle alors que l'autre accompagne le produit dans ses phases de traitement.

11. Dispositif de conservation suivant l'une des revendications 1 à 10, caractérisé en ce que le support d'informations (5;10) est d'une couleur déterminée correspondant à la nature du produit conditionné dans le tube.

12. Dispositif de conservation suivant l'une des revendications 2 et 6, destiné à la conservation d'un produit liquide, caractérisé en ce que le bouchon (2) de séparation du tube (1) en deux compartiments est un bouchon formé comme connu en soi par la combinaison d'une susbtance perméable à l'air et aseptisée et d'une substance pulvérulente transformée au contact du liquide en une pâte ou un gel étanche.

13. Dispositif de conservation suivant l'une des revendications 7 à 9, destiné à la conservation d'un produit liquide, caractérisé en ce que les moyens d'obturation comportent à une extrémité du tube (1) un bouchon (9a;15) formé comme connu en soi par la combinaison d'une susbtance perméable à l'air et aseptisée et d'une substance pulvérulente transformée au contact du liquide en une pâte ou un gel étanche.
